# FASCICULE DE BREVET EUROPEEN

(11) **EP 2 511 532 B1**
(45) Date de publication et mention de la délivrance du brevet: **05.08.2015**
(21) Numéro de dépôt: 11305455.5
(22) Date de dépôt: 15.04.2011
(51) Int. Cl.: F04D 13/06, F04D 29/053, H02K 1/27, H02K 1/28

(54) **Rotor à aimant et pompe de circulation de fluide**
Magnetrotor und Fluid-Umwälzpumpe
Rotor with magnet and fluid-circulation pump

(43) Date de publication de la demande: 17.10.2012
(73) Titulaire: Pompes Salmson, 78400 Chatou (FR)
(72) Inventeur: Bouilly Hervé, 53940 Le Genest St Isle (FR); Pottier Xavier, 53970 Montigne Le Brillant (FR); Cournee Michel, 53810 Change (FR); Diouron David, 53970 Nuille sur Vicoin (FR)
(74) Mandataire: Hirsch & Associés

(56) Documents cités:
- EP-A2- 1 096 644
- DE-A1- 4 343 854
- US-A1- 2007 052 310

## Description

La présente invention concerne un rotor à aimant et une pompe de circulation de fluide comprenant le rotor.

Dans les installations de chauffage à eau chaude, dans le bouclage des circuits de distribution d'eau chaude sanitaire, ainsi que dans les installations à énergie renouvelable (solaire, pompes à chaleur, air conditionné, ...) on utilise des pompes de circulation dont les composants peuvent être exposés à des risques de corrosion. Ceci est en particulier le cas pour les aimants des rotors à aimants dans les pompes de circulation à rotor noyé.

Il y a donc un besoin pour protéger les aimants d'un rotor à aimants pour les pompes de circulation.

Par ailleurs, il est connu de DE-A-43 43 854 une pompe magnétique pour milieu corrosif comprenant un arbre en matériau céramique entraîné en rotation par un moteur. Une bague est immobilisée au niveau d'une extrémité de l'arbre. La bague est intégrée, solidaire en rotation, dans la masse du rotor du moteur, rotor qui est totalement formé au niveau de sa surface extérieure en matériau plastique résistant à la corrosion.

A cette fin, la présente invention propose un rotor à aimant de moteur pour pompe de circulation de fluide à rotor noyé comprenant
- un arbre de transmission en matériau céramique, avec des encoches
- une bague immobilisée à l'arbre au niveau des encoches
- un aimant dans une encapsulation de protection soudée à la bague.

Selon une variante, la soudure de l'encapsulation à la bague est en des positions décalées le long de l'arbre par rapport aux encoches.

Selon une variante, la soudure est en des positions non décalées le long de l'arbre par rapport aux encoches.

Selon une variante, l'arbre est monobloc.

Selon une variante, l'arbre en deux parties, l'aimant étant entre les deux parties de l'arbre.

Selon une variante, l'extrémité en regard de chaque partie de l'arbre comporte les encoches et est revêtue d'une bague.

Selon une variante, l'encapsulation est soudée à chaque bague.

Selon une variante, l'encapsulation comprend une enveloppe et des joues reliant l'enveloppe à la ou les bagues.

Selon une variante, la ou les bagues sont serties ou sont emmanchées à force sur l'arbre.

Selon une variante, la ou les bagues ont une surface intérieure lisse.

L'invention se rapporte à une pompe de circulation de fluide comprenant le rotor décrit précédemment, le rotor étant noyé dans le fluide véhiculé.

D'autres caractéristiques et avantages de l'invention apparaîtront à la lecture de la description qui suit d'un mode de réalisation préféré de l'invention, donnée à titre d'exemple et en référence au dessin annexé qui montrent :
- La figure 1, un exemple de rotor à aimants.
- La figure 2, une vue d'un détail de la figure 1 ;
- Les figures 3 à 5, des variantes du rotor de la figure 1,
- La figure 6, un autre exemple de rotor à aimants.

L'invention se rapporte à un rotor à aimant de moteur pour pompe de circulation de fluide à rotor noyé. Le rotor comprend un arbre de transmission en matériau céramique, avec des encoches et au moins une bague immobilisée à l'arbre au niveau des encoches. Le rotor comprend aussi un aimant dans une encapsulation de protection soudée à la bague. Ceci permet de fixer l'aimant sur un arbre répondant aux réglementations sanitaires et de protéger l'aimant contre des risques de corrosion.

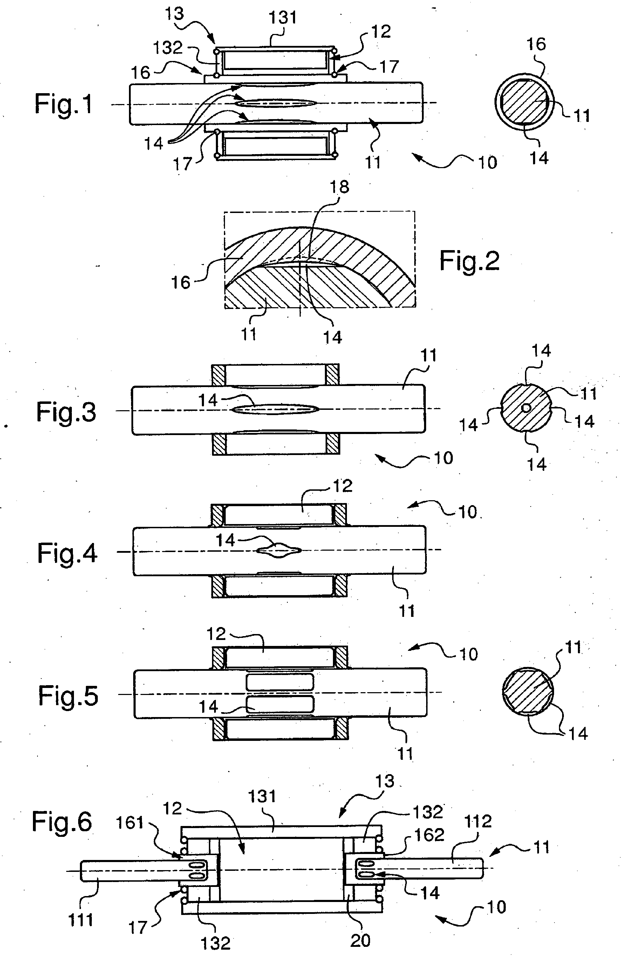

La figure 1 montre un exemple de rotor 10 à aimants 12. Le rotor 10 est spécialement conçu pour une utilisation dans une pompe de circulation d'eau ; il peut s'agir d'un rotor noyé de pompe de circulation. Le rotor 10 comporte un arbre 11 de transmission qui comporte des encoches 14. L'arbre 11 de transmission est en matériau céramique ce qui permet de répondre aux réglementations sanitaires car il est en contact avec le fluide circulé. De plus le matériau céramique est résistant à l'usure, aussi bien contre l'agressivité de l'eau que des particules présentes dans le fluide. Il est donc proposé un arbre 11 en un seul bloc, comme cela est représenté sur la figure 1, pour limiter les problématiques de concentricité et simplifier l'assemblage du rotor.

La figure 6 montre un autre exemple du rotor 10. Le rotor 10 est également spécialement conçu pour une utilisation dans une pompe de circulation d'eau ; il peut s'agir d'un rotor noyé de pompe de circulation. Le rotor 10 comporte un arbre 11 de transmission qui comporte des encoches 14. L'arbre 11 de transmission est en matériau céramique ce qui permet de répondre aux réglementations sanitaires car il est en contact avec le fluide circulé. De plus le matériau céramique est résistant à l'usure, aussi bien contre l'agressivité de l'eau que des particules présentes dans le fluide. Selon la figure 6, l'arbre 11 est en deux parties 111 et 112. Dans le cas d'un arbre en deux parties, un espace 20 entre les deux parties 111 et 112 de l'arbre peut-être utilisé pour loger l'aimant 12, donc réduire le diamètre du rotor 10 et donc réduire la dimension du moteur.

Quel que soit l'exemple de rotor 10, les aimants 12 sont de préférence des aimants permanents. Les aimants 12 sont en regard d'un stator du moteur de pompe et permettent l'entraînement du rotor 10. Le moteur peut être un moteur synchrone à commutation électronique. Les aimants 12 sont dans une matière qui n'est par résistante à l'eau. Le rotor 10 comporte pour cela une encapsulation 13 étanche à l'eau. L'encapsulation 13 peut comporter une enveloppe 131 s'étendant le long de l'arbre 11 et des joues 132 latérales à chaque extrémité de l'enveloppe 131. Les joues sont par exemple soudées à l'enveloppe. L'enveloppe 131 et les joues 132 peuvent être en acier inoxydable.

L'encapsulation 13 de l'aimant doit toutefois être étanche pour protéger l'aimant et être fixée de façon rigide pour transmettre le couple moteur. Une bague 16 permet la fixation de l'encapsulation et de l'aimant sur l'arbre 11. Dans le cas de la figure 1 avec un arbre 11 monobloc, la bague 16 peut aussi être monobloc sous la forme d'un tube. Selon la figure 6, le rotor 10 peut comporter deux bagues, par exemple sous forme de capsules, 161 et 162. Chaque capsule peut être assemblée sur les extrémités en regard des parties 111 et 112 de l'arbre, de part et d'autre de l'espace 20. Quelle que soit le nombre de bagues, celles-ci peuvent être en acier inoxydable. Ceci permet de résister à la corrosion à l'eau et permet la soudure de l'encapsulation comme décrit plus bas.

Le diamètre de la bague 16 monobloc ou en deux capsules peut être égal ou légèrement inférieur au diamètre de l'arbre 11. La bague 16 peut être maintenue par les efforts qu'elle exerce sur l'arbre 11 après l'assemblage. Notamment au niveau des encoches, la bague 16 pénètre dans celles-ci lors de l'assemblage. Au lieu de rester parfaitement ronde en section, des efforts déforment la circularité de la bague 16 qui épouse la forme des encoches 16 comme cela est visible sur la figure 2. La bague 16 « s'aplatit » légèrement dans la zone des encoches. La bague 16 subit une déformation 18 qui immobilise la bague 16 en translation et en rotation le long de l'arbre 11 au niveau des encoches. Le montage peut se faire à froid ou à chaud ou par écrasement avec un outil (roulage, sertissage...). La bague (monobloc ou en forme de capsule) a une surface intérieure lisse, ce qui rend la fabrication aisée. La bague est sertie ou est emmanchée à force sur l'arbre. L'emmanchement de la bague sur un arbre céramique est fait à chaud ou non. Lorsque les encoches sont atteintes, la bague en cette zone va se mettre en corde. La bague 16 (monobloc ou en deux capsules) et l'arbre 11 (monobloc ou en deux parties) sont donc solidaires en rotation et en translation.

Les encoches sont des évidements de formes diverses comme cela est visible sur les figures. Les encoches peuvent donc être réalisées sur la périphérie de l'arbre 11 directement par le procédé de fabrication de l'arbre céramique, sans reprise, donc sans coût additionnel. Selon la figure 1, les encoches présentent une forme longitudinale sur l'arbre 11. Selon la figure 6, les encoches 14 sont réalisées à l'extrémité des parties 111 et 112 en regard. En utilisant plusieurs encoches 14, la tenue au couple et en translation est améliorée. Les formes des encoches peuvent être peu profondes (0,2 ou 0,3 mm) et les dépouilles peuvent être très grandes pour faciliter l'éjection de l'arbre. Des bossages sont placés sur le diamètre intérieur du moule ce qui permet d'obtenir les évidements (encoches) sur le diamètre extérieur de l'arbre. Le procédé de fabrication reste identique quelque soit la caractéristique de l'arbre avec ou sans encoche. La céramique se présente sous forme de poudre ou de pâte (mélange de poudre et de produit liquide liant). Le moulage permet de compacter par pressage la poudre ou la pâte de céramique selon la technologie utilisée et obtenir un arbre ébauché en un seul bloc et de dimension beaucoup plus grande que celle souhaitée au final. C'est à ce stade que l'on peut effectuer des perçages radiaux si nécessaire. Selon le procédé utilisé, l'arbre ébauché est ensuite passé au four à des températures élevées (peuvent être supérieures à 1000°C). C'est lors du passage dans le four que le retrait s'effectue et est important (de 20 à 30 %). L'arbre devient extrêmement compact et dur. La dernière opération consiste à rectifier l'arbre pour obtenir la dimension souhaitée. Le principe consiste donc à dimensionner les encoches obtenues de l'opération de moulage de façon à ce qu'elles restent apparentes après l'opération d'usinage (Rectification, ...). La forme des encoches est adaptée à l'option de construction choisie. Notamment des formes allongées parallèles à l'axe seront privilégiées dans les constructions de type figure 1. Les formes plus circonférentielles seront privilégiées pour des constructions de type figure 6.

Les figures 3 à 5 montrent des formes d'encoches 14 relativement à l'arbre 11 monobloc de la figure 1. La figure 3 montre le rotor 10 et une section de l'arbre 11. Par exemple, quatre encoches 14 à 90° sont représentées. Les encoches 14 sont allongées, sensiblement de la taille des aimants. La figure 4 montre le rotor 10. Par exemple, quatre encoches 14 à 90° peuvent être prévues. Les encoches 14 sont plus ramassées le long de l'axe de l'arbre, sous forme d'étoile, avec deux branches selon l'axe de l'arbre et deux branches selon la circonférence de l'arbre. La figure 5 montre le rotor 10 avec une section de l'arbre 11. Par exemple, six encoches 14 peuvent être prévues. Les encoches 14 ont une forme rectangulaire.

La figure 6 montre des formes d'encoches 14 dans le cas d'un arbre 11 en deux parties. Les encoches 14 sont sensiblement ovales, et peuvent être, par exemple au nombre de deux paires à 180° par extrémité de parties 111 et 112. Les encoches 14 sont recouvertes par la bague sous forme de capsules 161 et 162.

Les formes des figures 1 à 5 sont valables pour les formes de la figure 6 et inversement.

La fixation de l'encapsulation 13 sur l'arbre 11 peut être réalisée de la manière suivante. Une soudure 17 peut être faite entre l'encapsulation 13 et la bague 16. Selon la figure 1, la soudure 17 est réalisée entre les joues 132 et la bague 16 monobloc. Selon la figure 6, la soudure est réalisée entre les joues 132 et chaque bague sous forme de capsule 161 et 162. L'utilisation de la soudure (par exemple au laser) pour fabriquer l'encapsulation et pour fixer l'encapsulation à la bague est simple de réalisation et permet de rendre l'intérieur de l'encapsulation étanche

La soudure 17 de l'encapsulation 13 à la bague 16 est en des positions décalées le long de l'arbre 11 par rapport aux encoches 14. La bague 16 n'étant pas déformée lorsqu'elle n'est pas au droit des encoches 14 le long de l'arbre 11, ceci permet de conserver la cylindricité de la bague 16 pour assurer la soudure continue de l'encapsulation 13 de l'aimant afin que celle-ci soit étanche. Selon la figure 1, les soudures 17 sont de part et d'autres des encoches, au-delà des encoches. Selon la figure 6, les bagues 161 et 162 s'étendent le long de l'arbre dans des directions opposées, au-delà des encoches 14. Les soudures 17 sont au-delà des encoches.

Alternativement, on peut envisager que les soudures 17 sont au droit des encoches si le procédé de soudure accepte les défauts de cylindricité associés.

## Revendications

1. Rotor (10) à aimant de moteur pour pompe de circulation de fluide à rotor noyé comprenant
- un arbre (11) de transmission en matériau céramique, avec des encoches (14)
- une bague (16) immobilisée à l'arbre au niveau des encoches
- un aimant (12) dans une encapsulation (13) de protection soudée à la bague.

2. Le rotor selon la revendication 1, dans lequel la soudure (17) de l'encapsulation (13) à la bague est en des positions décalées le long de l'arbre par rapport aux encoches (14).

3. Le rotor selon la revendication 1, dans lequel la soudure (17) est en des positions non décalées le long de l'arbre par rapport aux encoches (14).

4. Le rotor selon l'une des revendications précédentes, dans lequel l'arbre (11) est monobloc.

5. Le rotor selon l'une des revendications 1 à 3, dans lequel l'arbre (11) en deux parties (111, 112), l'aimant (12) étant entre les deux parties de l'arbre.

6. Le rotor selon la revendication 5, dans lequel l'extrémité en regard de chaque partie (111, 112) de l'arbre comporte les encoches et est revêtue d'une bague (161, 162).

7. Le rotor selon la revendication 6, dans lequel l'encapsulation (13) est soudée à chaque bague (161, 162).

8. Le rotor selon l'une des revendications 1 à 7, dans lequel l'encapsulation comprend une enveloppe (131) et des joues (132) reliant l'enveloppe à la ou les bagues.

9. Le rotor selon l'une des revendications 1 à 8, dans lequel la ou les bagues sont serties ou sont emmanchées à force sur l'arbre.

10. Le rotor selon l'une des revendications précédentes, dans lequel la ou les bagues ont une surface intérieure lisse.

11. Une pompe de circulation de fluide comprenant le rotor selon l'une des revendications précédentes, le rotor étant noyé dans le fluide véhiculé.

## Patentansprüche

1. Magnetrotor (10) eines Motors für eine Fluid-Umwälzpumpe mit Nassläuferrotor, welcher umfasst:
- eine Getriebewelle (11) aus keramischem Material, mit Nuten (14),
- eine Hülse (16), die im Bereich der Nuten auf der Welle fixiert ist,
- einen Magneten (12) in einer auf die Hülse aufgeschweißten Schutzkapsel (13).

2. Rotor nach Anspruch 1, wobei sich die Schweißverbindung (17) der Kapsel (13) mit der Hülse an Positionen befindet, die bezüglich der Nuten (14) entlang der Welle versetzt sind.

3. Rotor nach Anspruch 1, wobei sich die Schweißverbindung (17) an Positionen befindet, die nicht bezüglich der Nuten (14) entlang der Welle versetzt sind.

4. Rotor nach einem der vorhergehenden Ansprüche, wobei die Welle (11) einstückig ist.

5. Rotor nach einem der Ansprüche 1 bis 3, wobei die Welle (11) aus zwei Teilen (111, 112) besteht, wobei sich der Magnet (12) zwischen den zwei Teilen der Welle befindet.

6. Rotor nach Anspruch 5, wobei das dem anderen Teil zugewandte Ende jedes Teils (111, 112) der Welle die Nuten aufweist und von einer Hülse (161, 162) umgeben ist.

7. Rotor nach Anspruch 6, wobei die Kapsel (13) an jede Hülse (161, 162) angeschweißt ist.

8. Rotor nach einem der Ansprüche 1 bis 7, wobei die Kapsel eine Hülle (131) und Seitenstücke (132), welche die Hülle mit der oder den Hülse(n) verbinden, umfasst.

9. Rotor nach einem der Ansprüche 1 bis 8, wobei die Hülse(n) auf die Welle aufgequetscht oder aufgepresst ist (sind).

10. Rotor nach einem der vorhergehenden Ansprüche, wobei die Hülse(n) eine glatte Innenfläche aufweist (aufweisen).

11. Fluid-Umwälzpumpe, welche den Rotor nach einem der vorhergehenden Ansprüche umfasst, wobei der Rotor in das geförderte Fluid eingetaucht ist.

## Claims

1. A magnet rotor (10) of a motor for a canned rotor fluid circulation pump comprising:
- a transmission shaft (11) in ceramic material, with notches (14)
- a ring (16) locked to the shaft at the notches
- a magnet (12) in a protective encapsulation (13) welded to the ring.

2. The rotor of claim 1, wherein the weld (17) of the encapsulation (13) to the ring is at staggered positions along the shaft relative to the notches (14).

3. The rotor of claim 1, wherein the weld (17) is at non-offset positions along the shaft relative to the notches (14).

4. The rotor according to one of the preceding claims, wherein the shaft (11) is of a one-piece construction.

5. The rotor according to one of claims 1 to 3, wherein the shaft (11) is in two parts (111, 112), the magnet (12) being between the two parts of the shaft.

6. The rotor according to claim 5, wherein the opposing end of each part (111, 112) of the shaft includes notches and is clad with a ring (161, 162).

7. The rotor according to claim 6, wherein the encapsulation (13) is welded to each ring (161, 162).

8. The rotor according to one of claims 1 to 7, wherein the encapsulation comprises a casing (131) and cheeks (132) connecting the casing to the one or more rings.

9. The rotor according to one of claims 1 to 8, wherein the one or more rings are crimped or are force-fitted on the shaft.

10. The rotor according to one of the preceding claims, wherein the one or more rings have a smooth inner surface.

11. A fluid circulation pump comprising a rotor according to one of the preceding claims, the rotor being immersed in the pumped fluid.
